# EUROPÄISCHE PATENTANMELDUNG

(11) **EP 4 212 977 A1**
(43) Veröffentlichungstag der Anmeldung: **19.07.2023**
(21) Anmeldenummer: 22214138.4
(22) Anmeldetag: 16.12.2022
(51) Int. Cl.: G05B 19/418

(54) **REGEL- UND STEUERUNGSVERFAHREN SOWIE ANLAGE ZUR VERRINGERTEN CO2-EMISSION**

(30) Priorität: 18.01.2022 DE 102022101012
(71) Anmelder: Turck Holding GmbH, 58553 Halver (DE)
(72) Erfinder: vom Stein, Johannes, 42499 Hückeswagen (DE)
(74) Vertreter: DTS Patent- und Rechtsanwälte Schnekenbühl und Partner mbB

(57) **Zusammenfassung**

Die vorliegende Erfindung betrifft ein Verfahren zum Regel- und Steuern einer Anlage, umfassend mindestens eine Anlagenkomponente, eine Anlagensteuerung mit mindestens einer Steuerungskomponente und mindestens einem Feldgerät ausgebildet als Sensor oder Aktor, wobei in mindestens einem Datenspeicher spezifische Emissionsfaktoren pro Betriebsumfang hinterlegt sind, wobei für mindestens eine Analgenkomponente, mindestens eine Steuerungskomponente und/oder mindestens ein Feldgerät der Emissionsfaktor über den Betriebsumfang als Emissionswert ermittelt wird, insbesondere die spezifischen Emissionswerte für eine Gruppe und/oder alle Anlagenkomponenten, Steuerungskomponenten und/oder Feldgeräte erfasst werden. Weiterhin ist von der Erfindung eine Anlage umfasst, mittels welcher dieses Verfahren durchgeführt werden kann.

## Beschreibung

Die vorliegende Erfindung betrifft ein Regel- und Steuerungsverfahren nach dem Oberbegriff des Anspruchs 1 und eine Anlage nach dem Oberbegriff des Anspruchs 10.

Im Stand der Technik ist es bekannt, Maschinen und Industrieanlagen hinsichtlich ihrer CO2-Bilanz zu bewerten.

Eine solche Anordnung zeigt beispielsweise die US 20060106737 A1, wobei offenbart wird, eine Berechnung und Zuordnung der Emissionskosten aus Strommessungen entsprechender Sensoren vorzunehmen. Weiterhin ist aus der EP 1987402 A1 bekannt, eine modellbasierte prädiktive Regelung einer Gebäude-Energieanlage vorzunehmen, wobei der von der Energieanlage produzierte CO2-Ausstoss ein Kriterium der Optimierung ist. Ein vergleichbares Gerätemanagement beschreibt die JP 2010072757 A, bei welcher das Gerät in Abhängigkeit vom CO2 Ausstoß betrieben wird, wie auch die JP 05251938 B2 und JP 05918663 B2, in denen die Steuerung eines Wärmekraftwerkes beschrieben wird und die CO2-Emission als einer von mehreren Messwerten verarbeitet wird.

Bei all diesen bekannten Lösungen ist es nachteilig, dass aufgrund der sehr pauschalen Berechnung der CO2 Emission, Emissionen nicht einzelnen Segmenten einer komplexen Maschine oder Anlage zugeordnet werden können. Das erschwert die Optimierung.

Es ist die Aufgabe der vorliegenden Erfindung, eine Anlage und ein Verfahren vorzuschlagen, das es hinsichtlich der CO2-Emissionen ermöglicht, diese weiter zu verringern.

Diese Aufgabe wird erfindungsgemäß gelöst durch ein Regel- und Steuerungsverfahren nach den Merkmalen des Anspruchs 1 und einer Anlage nach den Merkmalen des Anspruches 10. Vorteilhafte Ausgestaltungen sind in den jeweiligen, zugehörigen Unteransprüchen angegeben.

Danach wird die Aufgabe gelöst durch Verfahren zum Regel- und Steuern einer Anlage, welche mindestens eine Anlagenkomponente, eine Anlagensteuerung mit mindestens einer Steuerungskomponente und mindestens einem als Feldgerät ausgebildeten Sensor oder Aktor umfasst. In mindestens einem Datenspeicher sind spezifische Emissionsfaktoren pro Betriebsumfang gespeichert, wobei für die mindestens eine Analgenkomponente, die mindestens eine Steuerungskomponente und/oder das mindestens eine Feldgerät der Emissionswert aus dem Emissionsfaktor über den Betriebsumfang ermittelt wird, insbesondere die spezifischen Emissionsfaktoren über den Betriebsumfang für eine Gruppe und/oder alle Anlagenkomponenten, Steuerungskomponenten und/oder Feldgeräte als Emissionswerte erfasst werden. Der Emissionswert ist hierbei insbesondere ein CO2-Wert oder ein CO2-Äquivalent.

Hierbei meint eine Anlagenkomponente ganz allgemein eine Maschine oder ein Maschinenteil, das zum Bearbeiten oder Behandeln eines (Vor-)Produktes oder eines Prozessmediums erforderlich ist. Unter Steuerungskomponenten sind alle elektronischen und/oder chemisch-physikalischen Bauteile zu verstehen, mittels welcher regelnd und/oder steuernd auf die Anlage und/oder Anlagenteile eingewirkt wird. Dies sind insbesondere die elektronischen Komponenten eines Datenübermittlungssystems, wie Ethernet, IO-Link, SPE, CAN-Bus, SPS etc. mit den zugehörigen elektronischen und mikroelektronischen Bauteilen und Datenprozessoren. Weiterhin sind unter Feldgeräten jede Art von in der Regel endständigen Sensoren und Aktoren zu verstehen (unterste Ebene), die im Falle von Sensoren Messwerte analog oder digital erfassen und an die Anlagensteuerung zur Verarbeitung weiterleiten oder, im Falle von Aktoren, einfache mechanische Bewegungen vornehmen oder veranlassen. Nachstehend werden Anlagenkomponenten, Steuerungskomponenten und/oder Feldgeräte einzeln oder gemeinschaftlich auch "Elemente" genannt.

Der Emissionsfaktor ist der normierte Emissionswert eines Elementes, der pro Betriebsumfang, wie eine Zeiteinheit (bspw. pro Sekunde), pro Aktion/Vorgang und/oder in Abhängigkeit von Leistungsdaten, wie Temperatur, Geschwindigkeit, Lautstärke, veranlasste Kraft etc. von dem Element emittiert oder verbraucht wird. Alternativ kann der Emissionsfaktor auch als Leistungsaufnahme oder Stromverbrauch pro Betriebsumfang gespeichert sein und hieraus der Emissionswert als CO2-Wert oder CO2-Äquivalent ermittelt werden.

Bei einem besonders vorteilhaften Verfahren wird der konkrete Emissionswert der Anlage auf Basis aller erfasster Emissionswerte bestimmt. Bei einem weiter verbesserten Verfahren wird die Steuerung der Anlagen oder von ein oder mehreren Anlagenteilen auf der Basis der Emissionsfaktoren und/oder Emissionswerte der beteiligten Anlagenkomponenten, der Steuerungskomponenten und/oder der Feldgeräte und hinsichtlich einem geringen Emissionswert vorgenommen. Hierzu kann vorteilhafterweise eine künstliche Intelligenz (KI) vorgesehen werden, die unter Beachtung von zwingenden und/oder definierten Prozessbedingungen und/oder Leistungsdaten der Anlage oder Anlagenteilen, eine emissionsoptimierte, insbesondere eine CO2-optimierte Prozesssteuerung veranlasst.

Hierbei wird vorliegend vereinfachend von "Steuerung" gesprochen, auch wenn eine Steuer- und Regelung vorliegen könnte.

Bei einem weiter verbesserten Verfahren weist die mindestens eine Analgenkomponente, die mindestens eine Steuerungskomponente und/oder das mindestens eine Feldgerät ein nichtflüchtiges Speicherelement auf, in dem der jeweilige spezifische Emissionsfaktor pro Betriebsumfang gespeichert ist.

Bei einem weiter verbesserten Verfahren wird der Emissionswert dezentral in der mindestens einen Analgenkomponente, der mindestens einen Steuerungskomponente und/oder dem mindestens einen Feldgerät ermittelt und an ein übergeordnetes Element übermittelt, und insbesondere mindestens für eine ersten Speicherdauer gespeichert. Die jeweiligen Elemente senden erfasste eigene Emissionswerte an ein übergeordnetes Element und/oder das übergeordnete Element liest bedarfsweise aktiv gespeicherte Emissionswerte eines (untergeordneten) Elementes aus dem jeweiligen Datenspeicher oder fordert diese vom untergeordneten Element bedarfsweise an. Auf diese Weise kann der Datenfluss in der Anlagensteuerung oder einem zugehörigen Steuerungselement optimiert werden.

Bei einem weiter verbesserten Verfahren wird von einem übergeordneten Element empfangene Emissionswerte eines untergeordneten Elements mit den jeweils eigenen Emissionswerten und/oder weiteren Emissionswerten mindestens eines weiteren untergeordneten Elements gemeinsam auswertet.

Die Bezeichnung von "untergeordneten" und "übergeordneten" Elementen oder "tieferen" und "höheren" Ebenen beschreibt eine Abhängigkeit von Elementen in einem vernetzten System. So ist ein Feldgerät, das als einfacher Sensor ausgebildet seine Messwerte und Messdaten zur Weiterverarbeitung an ein (höheres) Element sendet, das beispielsweise ein IO-Mastermodul ist und mit dem mehreren Feldgeräten verbunden ist. Ein Gateway-Modul, das mit vielen IO-Mastermodulen verbunden ist, stellt die nächsthöhere Ebene dar, wobei eine Cloud oder ein zentraler Anlagenserver die höchste Ebene darstellt. Insgesamt ist insbesondere in Datenbus-Systemen mit bidirektionalen Datenströmen und wechselseitigen Abhängigkeiten keine vollständige Hierarchie gegeben, so dass die Angaben zur Hierarchie auch kontextbezogen und/oder abhängig vom Zustand des Prozesses verstanden werden können.

Bei einem weiter verbesserten Verfahren werden die erfassten Emissionswerte nach mindestens einem der folgenden Feldaspekte gespeichert und/oder ausgewertet:
- Zeitlicher Bezug zum Prozessverlauf und/oder Prozessdauer der Anlage oder des Anlagenabschnitts, um beispielsweise Phasen des An- oder Abfahrens gesondert auswerten zu können,
- Tageszeit, um Umgebungseinflüsse, wie Temperatur oder Bedienergruppen auswerten zu können,
- Umgebungsdaten, insbesondere Umgebungstemperatur, Luftfeuchtigkeit, Strahlungseffekte etc. auswerten zu können,
- Energiequelle, -arten, insbesondere bei der Verfügbarkeit von diversen Primärenergiequellen, dezentralen Energieproduktionen, wie BHKW, Photovoltaik, Sonnenkollektoren und deren Speicheroptionen,
- Rekuperative Energiequelle/-arten,
- Zustandsdaten von Medien und/oder Rohstoffen.

Das Verfahren kann insbesondere dadurch weiter verbessert werden, indem die erfassten Emissionswerte nach mindestens einem der folgenden Elementaspekte gespeichert und/oder ausgewertet werden:
- Leistungsaufnahme der Elemente, insbesondere der Elemente in den unteren Ebenen, die in einer großen Anzahl in der Anlage vorhanden sind bzw. in jeder Ebene. Dies meint, dass in jeder Ebene eine hinreichende Grundgesamtheit von den zugehörigen Elementen hinsichtlich der Emissionswerte erfasst werden sollte, so dass eine Extrapolation auf alle Emissionswerte der Elemente einer Ebene möglich ist,
- Leistungsdaten der Elemente, wie Öffnungswinkel, aufgewendete Kraft, Betriebsbereich, als Anteil oder Prozentsatz der maximalen Leistung/Kraft, um Optimierungen spezifisch und insbesondere ohne Nachteile auf das gewünschte Produkt vornehmen zu können,
- Dauer und/oder Abstand zum optimalen Arbeitspunkt/-bereich,
- Reparatur- und Wartungstätigkeiten sowie zeitlicher Abstand hierzu
- Gesamtlauf-/-lebenszeit der Elemente.

Eine weitergehende Verbesserung sieht vor, dass die erfassten Emissionswerte aus mindestens einem Feldaspekt und mindestens einem Elementaspekt, aus mehreren Feldaspekten und/oder aus mehreren Elementaspekten gespeichert und/oder ausgewertet werden.

Gerade bei Kommunikations- und Steuerungsnetzwerken ist eine ausgeprägte Hierarchie der einzelnen Elemente gegeben. Bei einem CAN-Bus, Single Pair Ethernet, einem IO-Link-Netzwerk sind eine Vielzahl von Elementen eingebunden, deren spezifische Leistungsaufnahme und damit der Emissionswert einen relevanten Anteil am Emissionswert der Anlagen haben, so dass mit diesem Verfahren erstmalig eine Möglichkeit geschaffen wird, diese gesondert zu erfassen und mit Blick auf den Stromverbrauch und den Emissionswert gezielt zu steuern und zu optimieren.

Die Erfindung umfasst weiterhin eine Anlage zum Behandeln oder Herstellen von Produkten, umfassend mindestens eine Anlagenkomponente, eine Anlagensteuerung mit mindestens einer Steuerungskomponente und mindestens einem Feldgerät, das als Sensor oder Aktor ausgebildet ist, wobei diese Anlage ausgebildet ist, um ein Verfahren nach einem der vorgenannten Ausführungsformen durchzuführen.

Dabei weist die Anlage vorteilhafterweise mindestens eine Analgenkomponente, mindestens eine Steuerungskomponente und/oder mindestens ein Feldgerät auf, welche eine Erfassungseinheit umfassen oder mit einer solchen Erfassungseinheit verbunden sind, um den jeweils eigenen Emissionswert zu erfassen. Idealerweise sind die meisten oder alle Anlagenkomponenten, Steuerungskomponenten oder Feldgeräte mit einer solchen Erfassungseinheit ausgestattet.

Vorteilhafterweise umfasst die Erfassungseinheit einen Sensor, einen Mikroprozessor und/oder einen Datenspeicher, beziehungsweise ist zusätzlich oder alternativ hiermit verbunden, um den Eigenverbrauch und den eigenen Emissionswert zu erfassen.

Der besondere Vorteil besteht drin, dass bei einer dezentralen Berechnung der CO2 Emissionen, eine steuerungstechnische Effizienzsteigerung erfolgt, da die CO2 Emission den zentralen, zu optimierenden Wert darstellt. Durch eine durchgängige Ausstattung der Anlagen und Anlagenzweige mit einer unmittelbaren Erfassung und Übermittlung von Emissionswerten, können Analgenzweige, Funktions- und/oder Baugruppen zeitnah identifiziert werden, bei welchen der Emissionswert kritisch ist und gezielte Gegenmaßnahmen eingeleitet werden.

Eine Steuerung unter Einbindung einer künstlichen Intelligenz (KI) kann verwendet werden, um für den komplexen Gesamtprozess geeignete CO2-relevante Optimierungen zu identifizieren, im Rahmen von tolerierbaren Leistungszielen der Anlagen und des primären Behandlungs- und/oder Herstellungsprozesses. Die Auswertung und Einbindung einer KI erfolgt idealerweis in einer zentralen Prozessoreinheit auf einer hohen bzw. der höchsten Ebene.

Auf der Ebene der Steuerungselemente könnten Zeiten oder Prozessphasen identifiziert werden, in denen die Datenübertragungsrate (Taktung) herabgesetzt werden kann. Im Bereich von Sensoren kann die Abtastrate abhängig vom Prozessverlauf angepasst werden und nicht permanent mit der höchsten Abtastrate eine Erfassung erfolgen. Hierbei können beispielsweise logische Abhängigkeiten von Sensoren oder Aktoren beachtet werden, im Sinne von Master-Slave-Lösungen, und beispielsweise ein nachgeordneter Sensor erst aktiviert werden, wenn ein stromaufwärts messender Sensor einen gewissen Schwellenwerte überschreitet.

Weiterhin können baugleiche Steuerungselemente, Feldgeräte oder vergleichbare Gruppen dieser Elemente hinsichtlich des Emissionswertes verglichen werden und bei größeren prozessunabhängigen Abweichungen bedarfsweise gewartet oder ausgetauscht werden, um Emissionswerte der Gesamtanlage positiv zu beeinflussen.

Insbesondere wird der Rechenbedarf in der übergeordneten Steuerung verringert, wenn die Berechnung dezentral in einer unteren Steuerungsebene durchgeführt wird. Weiterhin wird das Datenaufkommen auf dem verbindenden Kommunikationssystem verringert. Die in der Steuerungshierarchie übergeordneten Module können die Werte der tieferen Hierarchieebene sammeln, verrechnen und einen Summenwert weiter übermitteln. Je nach Steuerungshierarchie kann der CO2-Emissionswert auch direkt in eine höhere Steuerungsebene übermittelt werden, z.B. direkt auf einem Server oder in einer Cloud abgelegt werden.

Der Besondere Vorteil besteht darin, dass der Eigenstromverbrauch dieses Sensors und der übrigen Anlage unter Berücksichtigung der CO2-Emission des Stromversorgers mit einberechnet wird.

Insgesamt trägt die verbesserte Ermittlung der CO2 Emissionen zu ihrer Optimierung bei, das heißt zu ihrer Verringerung. Die CO2 Emissionsermittlung dient dem übergeordneten Ziel, Anlagen und Maschinen hinsichtlich ihrer CO2 Bilanz zu bewerten, um Klimaneutralität zu erreichen und nachweisen zu können, beispielsweise gegenüber Behörden und/oder Kundenkreisen.

Weitere Einzelheiten und Vorteile der Erfindung sollen nun anhand eines in den Zeichnungen dargestellten Ausführungsbeispiels näher erläutert werden.

Es zeigen:
- Fig. 1: eine Hierarchie von Elementen einer nicht näher bezeichneten Anlage und
- Fig. 2: einen schematischen Erwärmungsprozess.

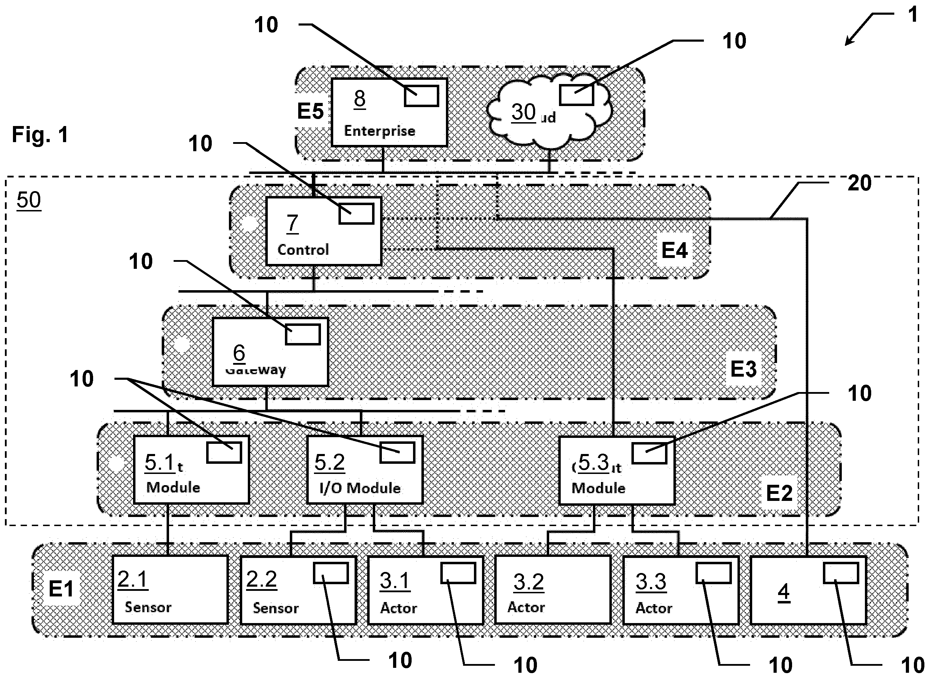

Fig. 1 zeigt eine Anlage 1 mit ihrem Kommunikationsnetzwerke 20 zur Regelung- und Steuerung der Anlagen 1 als Teil der Anlagensteuerung 50. Die Ebenen E1 symbolisiert die unterste Feldebene, die Ebene E2 und E3 stellen die erste und zweite Steuerungsebene dar, die Ebene E4 stellt die Prozessleitebene. Gemeinsam bilden die Ebenen E2, E3 und E4 die Anlagensteuerung 50, zu der ganz wesentlich auch das Kommunikationsnetzwerk 20 zählt, mit Schnittstellen zu den benachbarten Ebenen. Die Ebene E5 stellt die Betriebsleit- und Speicherungsebene dar, in der der Grundprozess und übergeordnete betriebliche Rahmenbedingungen definiert und veranlasst werden.

Auf der untersten Ebene E1, der Feldebene sind die Sensoren 2.1 und 2.2 angeordnet, wobei nur der Sensor 2.2 eine Erfassungseinheit 10 mit einem internen Stromsensor und einem nicht-flüchtigen Speicherelement umfasst, mittels welchem der Emissionswert EW ermittelt und gespeichert wird. Von den Aktoren 3.1 bis 3.3 weisen zwei Aktoren 3.1 und 3.3 eine solche Erfassungseinheit 10 auf, sowie die Sensor-Aktor-Einheit 4, die ebenfalls mit einer Erfassungseinheit 10 ausgestattet ist.

In einer einfachen Ausführungsform ist die Erfassungseinheit 10 eine einfaches Zählwerkt, dass pro Arbeitsschritt, wie ein Öffnen und ein Schließen, einen konkreten Emissionswert zuordnet und an ein übergeordnetes Element übermittelt.

Die Elemente der Feldebene E1 senden, sofern ermittelt, die Emissionswerte an die Elemente der ersten Steuerungsebene E2, welche selbst alle mit einer Erfassungseinheit 10 ausgestattet sind. Das Element 5.1 ist ein Input-Modul, das Element 5.2 ein I/O Modul und das Element 5.3 ein Output Modul. Im Falle der Elemente der Ebene E1, die kein eigenes Erfassungselement 10 aufweisen, ermittelt jeweils ein direkt oder indirekt übergeordnetes Element einer höheren Ebene E2 bis E5 den Emissionswert EW, ggf. über eine Extrapolation oder aus einer Analogie zu baugleichen oder vergleichbaren Elementen. Auf der zweiten Steuerungsebene E3 ist nur ein einzelnes Element 6 als Gateway Modul angeordnet, welches mit den Elementen 5.1 und 5.2 verbunden ist. Auf der Ebene 4, der Prozessleitebene ist eine zentraler Anlagenprozessor als Element 7 angeordnet und schließlich umfasst die Ebene 5, die Betriebs- und Speicherungsebene zwei Element 8 und 30, die für die Unternehmenssteuerung (Element 8) und die eine Cloud (Element 30) stehen.

In dem gezeigten Beispiel werden alle Emissionswerte der Ebene E1 bis E5 von dem Element 7, dem zentralen Anlagenprozessor ausgewertet und nachlaufend die Anlage 1 insgesamt gesteuert. Bedarfsweise werden Freigaben auch auf der Ebene E5 angefragt. Die Elemente der Ebenen E2, E3 und E4 stellen insbesondere die Steuerungselemente dar, wie insbesondere Input/Output Module, Gateway Module oder Controller.

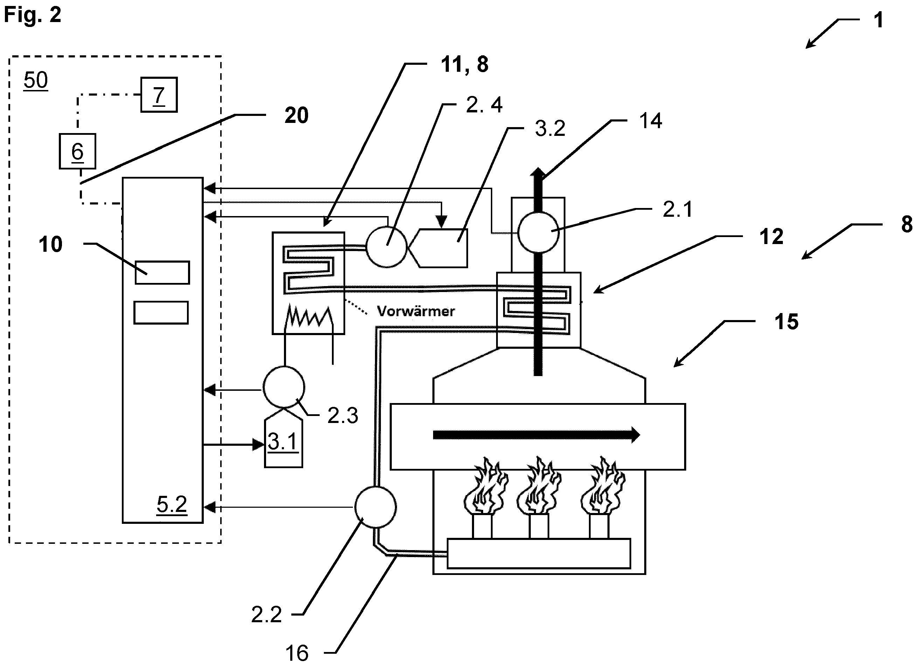

In der Fig. 2 ist eine Anlage 1 mit einer Erwärmungseinheit 15 als der ersten Anlagenkomponente 8 dargestellt, die mit zwei weiteren Anlagenkomponenten 8, einem Vorwärmer 11 und einer Wärmerückgewinnungseinheit 12 verbunden ist. Die Anlage 1 beziehungsweise die jeweiligen Anlagenkomponenten 8, weisen auf der Ebene E1 (Fig. 1), Aktoren und Sensoren als Feldgeräte auf, wobei mit dem Sensoren 2.1 die Abgasmenge, mit dem Sensor 2.2 die Temperatur des Brennstoffs, mit dem Sensor 2.4 die Menge des über Leitung 16 zugeführten Brennstoffs und mit dem Sensor 2.3 der elektrische Strom des Vorwärmers 11 gemessen wird.

Durch dasselbe Element 5.2 wird
- die elektrische Energie für den Vorwärmer 11 durch den Aktor 3.1 und
- das Ventil für die Brennstoffzufuhr durch Aktoren 3.2 angesteuert.

Hierbei wird angenommen, dass der in der Leitung 16 geführte Brennstoff vorgewärmt sein muss, um den Erwärmungsprozess effizient betreiben zu können. Alternativ könnte ein anderer Wärmebedarf oder eine alternative Energiequelle angenommen werden, zu der entweder die Wärmerückgewinnung 12 oder die elektrische Vorwärmung 11 genutzt wird. Vorliegend ist nur das Erfassungselemente 10 für den Emissionswert des Elementes 5.2 dargestellt, dem I/O-Modul, die Erfassungselemente für die jeweiligen Emissionswerte der sonstigen Elemente sind nicht dargestellt.

Zur Ermittlung der CO2 Emission dieses Anlagensegmentes müssen folgende Parameter vorliegen:
- Brennstoffzufluss
- Emissions- und Brennstoff-Verhältnis
- Elektrischer Eigenverbrauch der Sensoren 2.1 bis 2.4 und des I/O Moduls 5.2
- Strom-/Leistungsmessung des Vorwärmers
- Aktuelles Verhältnis der elektrischen Stromerzeuger (Strommix).

Aus dem Brennstoffzufluss und dem Emissions- und Brennstoff-Verhältnis lässt sich der CO2 Emissionsanteil der Verbrennung berechnen und zusätzliche Emissionswerte können aus dem Abgas 14 zur genaueren Erfassung und Kontrolle berücksichtigt werden. Ein weiterer Anteil des Emissionswertes kann aus der Strom-/Leistungsmessung des Vorwärmers 11 und dem aktuellen Strommix im Vorwärmer 11 berechnet werden. Ein dritter Anteil errechnet sich aus den Eigenverbräuchen der Sensoren 2.1 bis 2.4, den Aktoren 3.1 und 3.2 sowie dem aktuellen Strommix. Der gesamte Emissionswert oder der eines Anlagenzweiges, wie beispielsweise der beiden Vorwärmeinheiten 11, 12, ergibt sich aus der Summe dieser einzelnen CO2 Emissionen. Den aktuellen Emissionswerten können die vorgenannten Feld- oder Elementaspekte zugeordnet werden.

Die gemeinsame Auswertung und nachlaufende steuerungstechnische Nutzung erfolgt mittels des zentralen Anlagenprozessors (Element 7).

Der aktuelle Strommix wird über das Kommunikationsnetzwerke 20, vorliegend ein Feldbus, übermittelt. Dabei wird davon ausgegangen, dass der Strommix als bedeutsamer Feldaspekt sich wesentlich langsamer ändert als die Prozessparameter Brennstoffzufluss und elektrische Leistung. Somit steigt die Effizienz mit der dezentralen Berechnung, da nur ein CO2 Emissionswert häufig (zyklisch) übermittelt wird.

Das Optimierungspotential zu Reduktion der CO2 Emission könnte in dem Beispiel zum einen darin bestehen, dass der Prozess anders betrieben wird, z.B. die Abwärme maximal genutzt wird, oder darin, dass in Abhängigkeit von der Verfügbarkeit regenerativer Energiequellen vorgeheizt wird.

Der CO2 Emissionswert kann über ein Gateway (Element 6) zu einer Steuerung (Element 7) oder direkt zu einer Steuerung (Element 7) übermittelt werden. Alternativ kann die Übermittlung auch an oder über einen Server im Intranet (Element 30).

## Patentansprüche

1. Verfahren zum Regel- und Steuern einer Anlage (1), umfassend mindestens eine Anlagenkomponente (8, 30), eine Anlagensteuerung (50) mit mindestens einer Steuerungskomponente (5, 6, 7) und mindestens einem Feldgerät ausgebildet als Sensor (2.1 ... 2.4) oder Aktor (3,1 ... 3.3), wobei in mindestens einem Datenspeicher spezifische Emissionsfaktoren pro Betriebsumfang hinterlegt sind, **dadurch gekennzeichnet, dass** für mindestens eine Analgenkomponente (40), mindestens eine Steuerungskomponenten (5, 6, 7) und/oder mindestens ein Feldgerät der Emissionsfaktor über den Betriebsumfang als Emissionswert ermittelt wird, insbesondere die spezifischen Emissionsfaktoren über den Betriebsumfang für eine Gruppe und/oder alle Anlagenkomponenten (40), Steuerungskomponenten (5, 6, 7) und/oder Feldgeräte als Emissionswert erfasst wird.

2. Verfahren nach Anspruch 1, **dadurch gekennzeichnet, dass** der Emissionswert der Anlage (1) auf Basis aller erfasster Emissionswerte bestimmt wird.

3. Verfahren nach Anspruch 1 oder 2, **dadurch gekennzeichnet, dass** die Steuerung der Anlagen (1) oder von Anlagenteilen/-zweigen auf der Basis der Emissionswerte der beteiligten Anlagenkomponenten (8, 30), der Steuerungskomponenten (5, 6, 7) und/oder der Feldgeräte und hinsichtlich eines möglichst geringen Emissionswertes erfolgt.

4. Verfahren nach einem der vorherigen Ansprüche, **dadurch gekennzeichnet, dass** die mindestens eine Analgenkomponente (8, 30), die mindestens eine Steuerungskomponenten (5, 6, 7) und/oder das mindestens eine Feldgerät einen nichtflüchtiges Speicherelement aufweist, in dem der jeweilige spezifische Emissionsfaktor pro Betriebsumfang (BD) gespeichert ist.

5. Verfahren nach einem der vorherigen Ansprüche, **dadurch gekennzeichnet, dass** der Emissionswert dezentral in der mindestens einen Analgenkomponente (8, 30), der mindestens einen Steuerungskomponente (5, 6, 7) und/oder dem mindestens einen Feldgerät ermittelt wird und an ein übergeordnetes Element übermittelt wird, insbesondere mindestens für eine ersten Speicherdauer in dem jeweiligen Element als Entstehungsort/-element und/oder dem übergeordneten Element als Auswertungsort/-element gespeichert werden.

6. Verfahren nach einem der vorherigen Ansprüche, **dadurch gekennzeichnet, dass** von einem übergeordneten Element empfangene Emissionswerte eines untergeordneten Elements mit den jeweils eigenen Emissionswerten und/oder weiteren Emissionswerten mindestens eines weiteren untergeordneten Elements gemeinsam auswertet werden.

7. Verfahren nach einem der vorherigen Ansprüche, **dadurch gekennzeichnet, dass** die erfassten Emissionswerte nach mindestens einem der folgenden Feldaspekte gespeichert und/oder ausgewertet werden, vorrangig sequentiell und insbesondere als Mittelwert gespeichert werden:
- zeitliche Bezug zum Prozessverlauf und/oder Prozessdauer der Anlage oder des Anlagenabschnitts
- Tageszeit,
- Jahreszeit,
- Umgebungsdaten, insbesondere Umgebungstemperatur,
- Energiequelle, -arten,
- Rekuperative Energiequelle/-arten,
- Temperatur von Medien und/oder Rohstoffen.

8. Verfahren nach einem der vorherigen Ansprüche, **dadurch gekennzeichnet, dass** die erfassten Emissionswerte nach mindestens einem der folgenden Elementaspekte gespeichert und/oder ausgewertet werden, vorrangig sequentiell und insbesondere als Mittelwert gespeichert werden:
- Leistungsaufnahme der Elemente, insbesondere der Elemente in jeder Ebene,
- Leistungsdaten der Elemente, wie Öffnungswinkel, aufgewendete Kraft, Betriebsbereich, als Anteil oder Prozentsatz der maximalen Leistung/Kraft,
- Dauer und/oder Abstand zum optimalen Arbeitspunkt/-bereich,
- Reparatur- und Wartungstätigkeiten sowie zeitlicher Abstand hierzu,
- Gesamtlauf-/-lebenszeit der Elemente.

9. Verfahren nach einem der vorherigen Ansprüche 7 oder 8, **dadurch gekennzeichnet, dass** die erfassten Emissionswerte
- aus mindestens einem Feldaspekte und mindestens einem Elementaspekt,
- aus mehreren Feldaspekten und/oder aus mehreren Elementaspekten gespeichert und/oder ausgewertet werden.

10. Anlage (1) zum Behandeln oder Herstellen von Produkten, umfassend mindestens eine Anlagenkomponente (8, 30), eine Anlagensteuerung (50) mit mindestens einer Steuerungskomponente (5, 6, 7) und mindestens einem als Feldgerät ausgebildeten Sensor (2.1... 2.4) oder Aktor (3.1 ... 3.3), **dadurch gekennzeichnet, dass**
diese ausgebildet ist, ein Verfahren nach einem der vorgenannten Ausführungsformen durchzuführen.
